# EUROPÄISCHE PATENTSCHRIFT

(11) **EP 3 606 345 B1**
(45) Veröffentlichungstag und Bekanntmachung des Hinweises auf die Patenterteilung: **30.06.2021**
(21) Anmeldenummer: 18716095.7
(22) Anmeldetag: 28.03.2018
(51) Int. Cl.: A01N 43/80, A01N 59/20, A01N 59/12, A01N 59/00, A01P 1/00

(54) **STABILISIERTE BIOZIDZUSAMMENSETZUNG**
STABILIZED BIOCID COMPOSITION
COMPOSITION BIOCIDE STABILISÉE

(30) Priorität: 04.04.2017 EP 17000561
(43) Veröffentlichungstag der Anmeldung: 12.02.2020
(73) Patentinhaber: THOR GmbH, 67346 Speyer (DE)
(72) Erfinder: APENBERG, Stefan, 67378 Zeiskam (DE); BAUM, Rüdiger, 68809 Neulussheim (DE)
(86) Internationale Anmeldenummer: PCT/EP2018/000132
(87) Internationale Veröffentlichungsnummer: WO 2018/184716

(56) Entgegenhaltungen:
- EP-A1- 2 272 348
- WO-A2-2011/003906

## Beschreibung

Die vorliegende Erfindung betrifft stabilisierte bzw. lagerstabile Zusammensetzungen, enthaltend: (A) 2,5 bis 15 Gew.-% der Isothiazolinone 2-Methyl-2H-isothiazolin-3-on und 1,2-Benzisothiazolin-on und/oder dessen Natrium- und/oder Kalium-Salz, (B) 0,5 bis 50 Gew.-ppm Kupfer(II)-Ionen, bezogen auf den Gewichtsanteil der Komponente (A), (C) 100 bis 2.500 Gew.-ppm, bezogen auf die gesamte Zusammensetzung, wenigstens eines Oxidationsmittels, ausgewählt aus der Gruppe bestehend aus Natriumiodat, Kaliumiodat, Natriumbromat und Kaliumbromat, oder Mischungen dieser und (D) Wasser. Die Erfindung betrifft weiterhin ein Verfahren zur Konservierung von technischen Materialien mittels vorgenannter Zusammensetzungen.

In der Literatur sind vielfältige Methoden beschrieben, Isothiazolinone vor chemischer Zersetzung zu schützen und Biozidzusammensetzungen zu stabilisieren. Hierbei handelt es sich meist um die Stabilisierung von 3:1 Mischungen aus 5-Chlor-2-methyl-4-isothiazolin-3-on (CMIT) und Methyl-4-isothiazolin-3-on (MIT), wie sie bei der großtechnischen Herstellung üblicherweise anfallen. Das hochreaktive CMIT muss stabilisiert werden, während MIT unter anwendungs- oder lagertypischen Bedingungen weitgehend stabil ist.

Die europäische Offenlegungsschrift EP 0 721 736 A1 beschreibt beispielsweise stabilisierte Isothiazolinonzusammensetzungen von CMIT und MIT in denen die Stabilisierung durch nicht chelatisierte Kupfer(II)-Ionen erreicht wird, wobei das Gewichtsverhältnis von Kupfer(II)-Ionen und Isothiazolinonen bevorzugt im Bereich von 0,02 zu 1,5 liegt.

Zudem lehrt die europäische Offenlegungsschrift EP 0 749 689 A1 die Verhinderung von Ausfällungen in Isothiazolinonzusammensetzungen durch die Zugabe von Kupfer(II)-Ionen und Metallnitraten. Dabei werden zur Stabilisierung 0,1 bis 25 % Metallnitrate, wie beispielsweise Magnesiumnitrat und ca. 0,1 bis 100 ppm Kupfer (II)-Ionen zugesetzt.

Ebenfalls ist aus der europäischen Offenlegungsschrift EP 1 369 461 A1 bereits bekannt, dass der Abbau von Isothiazolinonen in wässrigen Farbsystemen dadurch verlangsamt werden kann, indem man 1 bis 200 ppm Kupfer (II)-Ionen zur Stabilisierung einsetzt. Im Verhältnis zu den Isothiazolinonen sind hier die Kupfermengen jedoch vergleichsweise hoch.

Weiterhin ist aus den europäischen Offenlegungsschriften EP 1 044 609 A1, EP 0 9100 952 A1 und EP 0 913 090 A1 bekannt, Kupfersalze neben vergleichsweise hohen Mengen an Oxidationsmitteln zur Stabilisierung von Isothiazolinonen zu verwenden.

Neben der eingangs beschriebenen 3:1 Mischungen aus CMIT und MIT hat in den vergangenen Jahren eine Mischung aus Methyl-4-isothiazolin-3-on und 1,2-Benzisothiazolin-3-on (BIT) als Biozid an Bedeutung gewonnen. Beschrieben ist dieses Biozid beispielsweise in der europäischen Offenlegungsschrift EP 1 005 271 A1 und ist unter dem Markennamen ACTICIDE™ MBS kommerziell erhältlich. Aufgrund der vergleichsweise hohen Stabilitäten der Isothiazolinone MIT und BIT erscheint eine besondere Stabilisierung dieses Biozids nicht notwendig, dennoch lassen sich insbesondere bei längerer Lagerung bei erhöhten Temperaturen im Bereich von 30 °C Verfärbungen und Ausfällungen beobachten.

Mit der Überwindung dieses Nachteils beschäftigt sich beispielsweise die internationale Patentanmeldung WO 2011/003906 A1. In diesem Dokument wird beschrieben, dass sich biozide Mittel, die als Isothiazolinone nur MIT und BIT enthalten, mit Hilfe von 1 bis 500 Gew.-ppm Kupfer(II)-Ionen, bezogen auf den gesamten Gewichtsanteil der Isothiazolinone, stabilisieren lassen sollen. Der in dieser Druckschrift behauptete Effekt ließ sich jedoch im Rahmen von Vergleichsversuchen nicht verifizieren. Im Rahmen der durchgeführten Vergleichsversuche stellte sich heraus, dass sich wässrige biozide Mittel, die 5 Gew.-% 2-Methyl-2*H*-isothiazol-3-on und 5 Gew.-% 1,2-Benzisothiazolin-3-on enthalten, durch Zugabe von 50 Gew.-ppm bzw. 250 Gew.-ppm Cu²⁺-Ionen, bezogen auf den Gehalt an Isothiazolinonen, nicht stabilisieren lassen.

Es bestand daher die Aufgabe eine stabilisierte MIT und BIT-enthaltende Biozidzusammensetzung zur Verfügung zu stellen.

Gelöst wird diese Aufgabe durch eine Zusammensetzung, enthaltend:
(A) 2,5 bis 15 Gew.-% der Isothiazolinone 2-Methyl-2H-isothiazolin-3-on und 1,2-Benzisothiazolin-on und/oder dessen Natrium- und/oder Kalium-Salz,
(B) 0,5 bis 50 Gew.-ppm Kupfer(II)-Ionen, bezogen auf den Gewichtsanteil der Komponente (A),
(C) 100 bis 2.500 Gew.-ppm, bezogen auf die gesamte Zusammensetzung, wenigstens eines Oxidationsmittels, ausgewählt aus der Gruppe bestehend aus Natriumiodat, Kaliumiodat, Natriumbromat und Kaliumbromat oder Mischungen dieser und
(D) Wasser.

Im Rahmen der Erfindung hat sich herausgestellt, dass die vorstehend definierten Zusammensetzungen, besonders lagerstabil sind und dass im Vergleich zu den Zusammensetzungen aus dem Stand der Technik der Abbau der Biozide 2-Methyl-2H-isothiazolin-3-on und 1,2-Benzisothiazolin-on effektiv unterbunden ist. Zudem lassen sich in den erfindungsgemäßen Zusammensetzungen nahezu keine Ausfällungen und Verfärbungen beobachten.

Zusammensetzungen bedeuten im Sinne der vorliegenden Erfindung Biozidkonzentrate, die zur Konservierung von technischen Produkten verwendet werden. Derartige Zusammensetzungen sind vorzugsweise flüssig und auf Wasserbasis. "Flüssig" bedeutet dabei, dass die Zusammensetzung bei Raumtemperatur im flüssigen Aggregatzustand vorliegt und der Gehalt an festen bzw. ungelösten Bestandteilen 0 bis 1 Gew.-%, bevorzugt 0 bis 0,5 Gew.-% beträgt. Besonders bevorzugt sind die Zusammensetzungen gänzlich frei von festen bzw. ungelösten Bestandteilen.

Die erfindungsgemäßen Zusammensetzungen enthalten als Komponente (A) 2,5 bis 15 Gew.-%, bevorzugt 5 bis 10 Gew.-% der beiden Isothiazolinone 2-Methyl-2H-isothiazolin-3-on und 1,2-Benzisothiazolin-on, und/oder dessen Natrium- und/oder Kalium-Salz. Gemäß einer bevorzugten Ausführungsform der Erfindung enthalten die Konzentrate als Isothiazolinone nur das 2-Methyl-2H-isothiazolin-3-on und das 1,2-Benzisothiazolin-on und/oder dessen Natrium- und/oder Kalium-Salz. Das 1,2-Benzisothiazolin-on wird bevorzugt in Form seiner Natrium- und/oder Kalium-Salze eingesetzt. Die Herstellung der Alkalimetallsalze des 1,2-Benzisothiazolin-ons erfolgt üblicherweise durch Umsetzung von 1,2-Benzisothiazolin-on mit dem entsprechenden Alkalimetallhydroxid, wobei typischerweise 0,7 bis 1,2 Moläquivalente des Alkalimetallhydroxids, bezogen auf das 1,2-Benzisothiazolin-on, bevorzugt 0,8 bis 1,1 Moläquivalente eingesetzt werden. Bei der Berechnung des Gehaltes der beiden Isothiazolinone 2-Methyl-2H-isothiazolin-3-on und 1,2-Benzisothiazolin-on geht der Gehalt an freiem 1,2-Benzisothiazolin-on in die Berechnung ein.

Das Gewichtsverhältnis der Isothiazolinone 2-Methyl-2H-isothiazolin-3-on und 1,2-Benzisothiazolin-on kann über einen breiten Bereich hinweg variieren, bevorzugt liegt das Gewichtsverhältnis von 2-Methyl-2H-isothiazolin-3-on und 1,2-Benzisothiazolin-on im Bereich von 3:1 bis 1:3, besonders bevorzugt im Bereich von 1:2 bis 2:1.

Gemäß einer besonders bevorzugten Ausführungsform der Erfindung enthält die Zusammensetzung als Isothiazolinone nur die zwei Isothiazolinone 2-Methyl-2H-isothiazolin-3-on und 1,2-Benzisothiazolin-on, und/oder dessen Natrium- und/oder Kalium-Salz.

Die erfindungsgemäße Zusammensetzung enthält zu ihrer Stabilisierung die Komponenten (B) und (C).

Als Komponente (B) enthält die erfindungsgemäße Zusammensetzung 0,5 bis 50 Gew.-ppm Kupfer(II)-Ionen, bevorzugt 1 bis 35 Gew.-ppm Kupfer-(II)-Ionen, besonders bevorzugt 1 bis 20 Gew.-ppm Kupfer(II)-Ionen, bezogen auf den Gewichtsanteil der Komponente (A), also auf den gesamten Gewichtsanteil der Isothiazolinone 2-Methyl-2H-isothiazolin-3-on und 1,2-Benzisothiazolin-on in der Zusammensetzung.

Als Quelle für die in der Zusammensetzung enthaltenen Kupfer(II)-Ionen kommen sämtliche wasserlöslichen Kupfer(II)-Salze bzw. Komplexe in Frage. Allgemein ist das Kupfersalz ausgewählt aus der Gruppe bestehend aus Kupfersulfat, Kupferacetat, Kupferchlorid, Kupferbromid, Kupferchlorat, Kupferperchlorat, Kupfernitrit und Kupfernitrat, oder Mischungen der genannten Verbindungen. Gemäß einer bevorzugten Ausführungsform der Erfindung wird zur Herstellung der erfindungsgemäßen Zusammensetzung Kupfernitrat verwendet.

Als Komponente (C) enthält die erfindungsgemäße Zusammensetzung allgemein 100 bis 2.500 Gew.-ppm, bezogen auf die gesamte Zusammensetzung, wenigstens eines Oxidationsmittels, ausgewählt aus der Gruppe bestehend aus Natriumiodat, Kaliumiodat, Natriumbromat und Kaliumbromat oder Mischungen dieser. In Bezug auf den maximalen Gehalt des Oxidationsmittels in der erfindungsgemäßen Zusammensetzung hat es sich bei der Verwendung der Zusammensetzung als vorteilhaft herausgestellt, wenn diese in Bezug auf Natriumiodat und/oder Kaliumiodat nicht mehr als 500 ppm und in Bezug auf Natriumbromat und/oder Kaliumbromat nicht mehr als 2.000 ppm enthält. So ließ sich bei dem bestimmungsgemäßen Einsatz der Zusammensetzungen in Polymeremulsionen beobachten, dass Zusammensetzungen mit einem jeweils höheren Gehalt an Oxidationsmittel zum Auftreten von Verfärbungen in den Farben beitrugen.

Gemäß einer bevorzugten Ausführungsform der Erfindung enthält die Zusammensetzung 100 bis 2.500 ppm bezogen auf die gesamte Zusammensetzung, wenigstens eines Oxidationsmittels, ausgewählt aus der Gruppe bestehend aus Natriumiodat, Kaliumiodat, Natriumbromat und Kaliumbromat oder Mischungen dieser, wobei der Gehalt an Natriumiodat und/oder Kaliumiodat im Bereich von 100 bis 500 ppm liegt und der Gehalt an Natriumiodat und/oder Kaliumiodat im Bereich von 100 bis 2.000 ppm liegt.

Gemäß einer bevorzugten Ausführungsform der Erfindung enthält die Zusammensetzung als Komponente (C) als Oxidationsmittel ausschließlich eines oder mehrere ausgewählt aus der Gruppe bestehend aus Natriumiodat, Kaliumiodat, Natriumbromat und Kaliumbromat oder Mischungen dieser. Gemäß einer mehr bevorzugten Ausführungsform der Erfindung enthält die Zusammensetzung als Oxidationsmittel Natrium und/oder Kaliumiodat in einer Menge im Bereich von 100 bis 500 Gew.-ppm, bezogen auf die gesamte Zusammensetzung. Gemäß einer alternativ bevorzugten Ausführungsform der Erfindung enthält die Zusammensetzung als Oxidationsmittel Kalium und/oder Natriumbromat in einer Menge im Bereich von 100 bis 2.500 Gew.-ppm, bevorzugt im Bereich von 500 bis 2.000 Gew.-ppm, bezogen auf die gesamte Zusammensetzung.

Der Gehalt an Wasser, der Komponente (D) der Zusammensetzung, kann über weite Bereiche hinweg variieren und beträgt allgemein 85 bis 97,5 Gew.-%, bevorzugt etwa 90 Gew.%. Gemäß einer bevorzugten Ausführungsform der Erfindung enthält die Zusammensetzung als Komponente (D) demineralisiertes oder enthärtetes Wasser.

Bevorzugte Zusammensetzungen sind solche, die im Wesentlichen frei von organischen Lösungsmitteln sind. "Im Wesentlichen frei von organischen Lösungsmitteln" bedeutet im Rahmen der Erfindung einen Gewichtsanteil an organischem Lösungsmittel in der Zusammensetzung im Bereich von 0 bis 3 Gew.-%, vorzugsweise im Bereich von 0 bis 1 Gew.-%, bevorzugt völlige Abwesenheit von organischen Lösungsmitteln.

In einer bevorzugten Ausführungsform weist die erfindungsgemäße Zusammensetzung einen Nitratgehalt von 1.000 Gew.-ppm oder weniger, bevorzugt von 500 Gew.-ppm oder weniger, besonders bevorzugt von 50 Gew.-ppm oder weniger bezogen auf das Gesamtgewicht der Zusammensetzung auf. In einer anderen Ausführungsform beträgt der Nitratgehalt der Zusammensetzung weniger als 20 Gew.-ppm.

Der pH-Wert der Zusammensetzung liegt allgemein im Bereich von 8 bis 11, bevorzugt im Bereich von 8,2 bis 9,2.

Produktionsbedingt ist in den in der Zusammensetzung enthaltenen Isothiazolinonen zumeist ein gewisser Anteil an Kochsalz enthalten, der sich dann auch in der Zusammensetzung wiederfinden lässt. Aufgrund der Korrosivität der in dem Kochsalz enthaltenen Chloridionen sind daher Zusammensetzungen mit einem Gewichtsanteil an NaCl im Bereich von 0 bis 2,8 Gew.-%, bevorzugt im Bereich von 0 bis 2 Gew.-%, alternativ bevorzugt im Bereich von 0 bis 60 Gew.-%, bezogen auf das in der Zusammensetzung enthaltene 2-Methyl-2H-isothiazolin-3-on.

Produktionsbedingt kann in den in der Zusammensetzung enthaltenen Isothiazolinonen zumeist ein gewisser Anteil an Ca²⁺-Ionen enthalten sein, der sich dann in der Zusammensetzung wiederfinden lässt. Auch können über die Komponente (D), das Wasser, weitere Ca²⁺-Ionen in die Zusammensetzung eingeschleppt werden, die in Summe über 10 Gew.-ppm, bezogen auf die Zusammensetzung, betragen können und zu Wirkstoffausfällungen führen können.

Daher hat es sich als besonders vorteilhaft herausgestellt, wenn die Zusammensetzung ferner dadurch gekennzeichnet ist, dass sie
(E) 0 bis 10 Gew.-ppm, bevorzugt 0 bis 8 ppm, besonders bevorzugt 0 bis 2 ppm Ca²⁺-Ionen, bezogen auf die gesamte Zusammensetzung, enthält.

Die Erfindung betrifft daher gemäß einer besonders bevorzugten Ausführungsform eine Zusammensetzung, enthaltend:
(A) 2,5 bis 15 Gew.-% der Isothiazolinone 2-Methyl-2H-isothiazolin-3-on und 1,2-Benzisothiazolin-on und/oder dessen Natrium- und/oder Kalium-Salz,
(B) 0,5 bis 50 Gew.-ppm Kupfer(II)-Ionen, bezogen auf den Gewichtsanteil der Komponente (A)
(C) 100 bis 2.000 Gew.-ppm, bezogen auf die gesamte Zusammensetzung, wenigstens eines Oxidationsmittels, ausgewählt aus der Gruppe bestehend aus Natriumiodat, Kaliumiodat, Natriumbromat und Kaliumbromat oder Mischungen dieser,
(D) Wasser und
(E) 0 bis 10 Gew.-ppm, bevorzugt 0 bis 8 ppm, besonders bevorzugt 0 bis 2 ppm Ca²⁺-Ionen, bezogen auf die gesamte Zusammensetzung.

Derartige Zusammensetzungen haben sich im Rahmend der vorliegenden Erfindung als besonders lagerstabil im Hinblick auf die Bildung von Ausfällungen und Niederschlägen erwiesen.

Alternativ zu der vorstehend beschriebenen Ausführungsform hat es sich ebenfalls als vorteilhaft herausgestellt, wenn die erfindungsgemäße Zusammensetzung einen oder mehrere Komplexbildner enthält. Komplexbildner sind im vorliegenden Falle Verbindungen, die Ca²⁺-Ionen zu binden vermögen. Dies kann genutzt werden, um die Härte des Wassers zu verringern und um die störenden Kalzium Ionen zu komplexieren. Daher hat es sich als besonders vorteilhaft herausgestellt, wenn die Zusammensetzung ferner dadurch gekennzeichnet ist, dass die Zusammensetzung
(E) 10 bis 500 Gew.-ppm, bevorzugt 50 bis 200 ppm wenigstens eines Komplexbildners, bezogen auf die gesamte Zusammensetzung, enthält.

"Wenigstens eines Komplexbildners" bedeutet im Sinne der vorliegenden Erfindung, dass die Zusammensetzung einen, zwei, drei, vier oder mehrere Komplexbildner, enthält. Als Komplexbildner geeignet sind allgemein Verbindungen, die Ca²⁺-Ionen zu binden vermögen. Gemäß einer bevorzugten Ausführungsform der Erfindung ist der wenigstens eine Komplexbildner, ausgewählt aus der Gruppe bestehend aus Methylglycindiessigsäure (MGDA), Ethylendiamintetraessigsäure (EDTA), Nitrilotriessigsäure (NTA), Tripolyphosphat (TPP), Citraten, Phosphonaten und Kronenethern oder Mischungen dieser. Besonders bevorzugte Komplexbildner sind EDTA, NTA und MGDA.

Die erfindungsgemäße Zusammensetzung kann zusätzlich zu 2-Methylisothiazolin-3-on und 1,2-Benzisothiazolin-3-on noch einen oder mehrere weitere biozide Wirkstoffe enthalten, die in Abhängigkeit vom Anwendungsgebiet ausgewählt werden. Gemäß einer bevorzugten Ausführungsform enthält die erfindungsgemäße Zusammensetzung neben den beiden Isothiazolinonen weiterhin N-Methyl-1,2-Benzisothiazolin-3-on. Gemäß einer besonders bevorzugten Ausführungsform der Erfindung enthält die erfindungsgemäße Zusammensetzung neben den beiden Isothiazolinonen weiterhin N-Methyl-1,2-Benzisothiazolin-3-on in einer Menge im Bereich von 1 bis 7,5 Gew.-%, bevorzugt 2,5 bis 5 Gew.-%, bezogen auf die gesamte Zusammensetzung. Gemäß einer Ausführungsform enthält die erfindungsgemäße Zusammensetzung als Isothiazolinone nur 2-Methyl-2H-isothiazol-3-on, 1,2-Benzisothiazolin-3-on und N-Methyl-1,2-Benzisothiazolin-3-on.

Die erfindungsgemäße Zusammensetzung kann hergestellt werden, indem die Bestandteile unter Rühren in jeder Reihenfolge gemischt werden.

Die erfindungsgemäße Zusammensetzung eignet sich insbesondere zur Konservierung von technischen Materialien, die anfällig sind gegen den Befall durch Mikroorganismen.

Die Erfindung betrifft daher auch die Verwendung der erfindungsgemäßen Zusammensetzung zum Schutz von technischen Materialien vor Befall durch und der Bekämpfung von Mikroorganismen, sowie ein Verfahren zum Schutz von technischen Materialien vor Befall und/oder Zerstörung durch Mikroorganismen, das dadurch gekennzeichnet ist, dass man die erfindungsgemäße Zusammensetzung auf den Mikroorganismus oder dessen Lebensraum einwirken lässt. Die Einwirkung kann dabei in verdünnter oder unverdünnter Form erfolgen.

Bevorzugte technische Materialien sind funktionelle Flüssigkeiten und wasserhaltige technische Produkte, wie beispielsweise Farben, Innenraumfarben, Lacke, Lasuren, Putze, Innenputze, Emulsionen, Latices, Polymerdispersionen, Vor- und Zwischenprodukte der chemischen Industrie, beispielsweise bei der Farbstoffproduktion und -lagerung , Ligninsulfonate, Kreideaufschlämmungen, mineralische Slurries, keramische Massen, Klebstoffe, Dichtstoffe, caseinhaltige Produkte, stärkehaltige Produkte, Bitumenemulsionen, Tensidlösungen, Kraftstoffe, Waschmittel, Reinigungsmittel, Detergentien und Reinigungsmittel für Industrie und Haushalt, Pigmentpasten und Pigmentdispersionen, Tinten, lithografischen Flüssigkeiten, Verdicker, kosmetische Produkte, Toilettenartikel, Wasserkreisläufe, Flüssigkeiten bei der Papierverarbeitung, Flüssigkeiten bei der Lederherstellung, Flüssigkeiten bei der Textilherstellung, Bohr- und Schneidöle, hydraulische Flüssigkeiten und Kühlschmierstoffe. Bevorzugt sind die technischen Materialen ausgewählt aus der Gruppe bestehend aus Innenraumfarben, Innenputzen, Polymerdispersionen und kosmetischen Produkten.

Die jeweilige Anwendungskonzentration der erfindungsgemäßen Zusammensetzung richtet sich nach der Art und dem Vorkommen der zu bekämpfenden Mikroorganismen, der mikrobiellen Ausgangsbelastung sowie nach der Zusammensetzung des zu schützenden technischen Materials.

Die optimale Einsatzmenge für die jeweilige Anwendung kann vor dem Praxiseinsatz in an sich und dem Fachmann hinlänglich bekannter Weise durch Testreihen im Labor ermittelt werden. Allgemein liegen die Anwendungskonzentrationen, bezogen auf die zwei Isothiazolinone im Bereich von 10 bis 500 ppm, vorzugsweise im Bereich von 50 bis 300 ppm, bezogen auf das zu schützende Material.

Der besondere Vorteil der Erfindung liegt darin, dass durch geringe Mengen an Kupfer(II)-Ionen im Zusammenspiel mit geringen Mengen an Oxidationsmittel(n) eine Langzeitstabilität der erfindungsgemäßen bioziden Zusammensetzung erreicht werden kann, und im Vergleich zu unstabilisierten bioziden Zusammensetzungen Wirkstoffabbau, Verfärbung und Ausfallen von Zersetzungsprodukten effektiv unterbunden, zumindest jedoch deutlich verringert werden kann.

### Die nachstehenden Vergleichsbeispiele und Beispiele verdeutlichen die Erfindung.

### Vergleichsbeispiel 1: Mit Cu(II)-Ionen stabilisierte Zusammensetzungen

Um zu überprüfen, dass die in dem Europäischen Patent EP-B 2 272 348 patentierte Lehre tatsächlich ist, wurden die nachfolgend beschriebenen Vergleichsversuche durchgeführt:

### Probe A (unstabilisiert)

569,8 g demineralisiertes Wasser wurden vorgelegt, mit 17,86 g einer wässrigen Natriumhydroxyd-Lösung (50 Gew.-%), und 21,6 g Natriumchlorid versetzt und solange gerührt, bis alles gelöst war. Hinzu gab man 42,38 handelsübliches, feuchtes BIT (84,94 Gew.-%) und rührte solange bei Raumtemperatur, bis sich alles gelöst hatte.

In diese Lösung gab man anschließend unter Rühren 72,0 g einer wässrigen MIT Lösung (49,89 Gew.-%). Man erhielt eine klare, fast farblose Lösung mit einem pH-Wert von 8,6.

### Proben B und C (vermeintlich stabilisiert)

Herstellung von Probe B: 100,0 g der oben beschriebenen Probe A wurden vorgelegt und mit 0,10 g einer 1,83 %igen Lösung von Kupfer(II)nitrattrihydrat (entsprechend 0,5 % Cu²⁺) unter Rühren versetzt.

Herstellung von Probe C: 100,0 g der oben beschriebenen Probe A wurden vorgelegt und mit 0,50 g einer 1,83 %igen Lösung von Kupfer(II)nitrattrihydrat (entsprechend 0,5 % Cu²⁺) unter Rühren versetzt.

Man erhielt klare, fast farblose Lösungen mit einem pH-Wert von 8,6.

Die drei Proben wurden bei 65°C gelagert und nach 5 Tagen das Aussehen bewertet. Die Ergebnisse sind in Tabelle 1 angegeben.

**Tabelle 1:**

| | Probe A (0 ppm Cu²⁺) | Probe B 50 ppm Cu²⁺ * | Probe C 250 ppm Cu²⁺ * |
|---|---|---|---|
| Aussehen | Schwarze Lösung mit gelbem Bodensatz | Schwarze Lösung mit gelbem Bodensatz | Schwarze Lösung mit gelbem Bodensatz |

| | | | |
|---|---|---|---|
| *: bezogen auf den gesamten Gewichtsanteil der Isothiazolinone | | | |

Wie aus den in Tabelle 1 dargestellten Ergebnissen hervorgeht, lassen sich wässrige Zusammensetzungen, die 5 Gew.-% MIT und 5 Gew.-% BIT enthalten durch Zugabe von 50 Gew.-ppm (Probe B) bzw. 250 Gew.-ppm (Probe C) Cu²⁺-Ionen bezogen auf den Gehalt an Isothiazolonen entgegen der Lehre der EP 2 272 348 nicht zufriedenstellend stabilisieren.

### Beispiel 1: Stabilisierung von kaliumiodathaltigen Isothiazolinon-Zusammensetzungen mit verschiedenen Mengen an Cu(II)-Ionen

Unter Verwendung von demineralisiertem Wasser, einer wässrigen Natriumhydroxyd-Lösung, handelsüblichem, feuchtem BIT, einer wässrigen MIT Lösung (ACTICIDE M 25 S), einer Kupfer(II)nitrattrihydratlösung und Kaliumiodat bzw. Kaliumbromat wurden die in Tabelle 2 definierten Proben hergestellt. Man erhielt klare, fast farblose Lösungen mit einem pH-Wert von 8,6. Die einzelnen Proben wurden bei 65°C gelagert und nach 5 Tagen das Aussehen bewertet. Die Ergebnisse sind in Tabelle 2 angegeben.

**Tabelle 2:**

| BIT [%] | MIT [%] | ITges. [%] | Cu²⁺ [ppm*] | KIO₃ [ppm] | Aussehen |
|---|---|---|---|---|---|
| 5 | 5 | 10 | 50 | - | Verfärbung, Bodensatz |
| 5 | 5 | 10 | 50 | 30 | Verfärbung, Bodensatz |
| 5 | 5 | 10 | 75 | 250 | grüne Ausfällungen |
| 5 | 5 | 10 | 0,25 | 250 | Verfärbung, Bodensatz |
| 5 | 5 | 10 | 0,5 | 250 | klare Lösung |
| 5 | 5 | 10 | 1 | 250 | klare Lösung |
| 5 | 5 | 10 | 20 | 250 | klare Lösung¹ |
| 5 | 5 | 10 | 50 | 250 | klare Lösung |
| 2,5 | 2,5 | 5 | 1 | 250 | klare Lösung |
| 2,5 | 5 | 7,5 | 1 | 250 | klare Lösung¹ |
| 2,5 | 5 | 7,5 | 75 | 250 | grüne Ausfällungen |
| 2,5 | 5 | 7,5 | 50 | 250 | klare Lösung |
| | | | | | |

| BIT [%] | MIT [%] | ITges. [%] | Cu²⁺ [ppm*] | KBrO₃ [ppm] | Aussehen |
|---|---|---|---|---|---|
| 5 | 5 | 10 | 1 | 250 | klare Lösung |
| 2,5 | 2,5 | 5 | 1 | 250 | klare Lösung |

| | | | | | |
|---|---|---|---|---|---|
| *: bezogen auf den gesamten Gewichtsanteil der Isothiazolinone; ITges.: Isothiazolinongehalt [Gew.-%]; ¹: in geringem Maße weiße Ausfällungen | | | | | |

Wie man der Tabelle 2 entnehmen kann, lassen sich Isothiazolinon-Zusammensetzungen, die 250 Gew.-ppm Kaliumiodat enthalten, durch Zugabe von 0,5 bis 50 Gew.-ppm Cu²⁺-Ionen, bezogen auf den Gewichtsanteil der Isothiazolinone, stabilisieren.

### Beispiel 2: Stabilisierung von Cu(II)-Ionen enthaltenden Zusammensetzungen mit verschiedenen Mengen an Oxidationsmitteln

Unter Verwendung von demineralisiertem Wasser, einer wässrigen Natriumhydroxyd-Lösung, handelsüblichem, feuchtem BIT, einer wässrigen MIT Lösung (ACTICIDE M 25 S), einer Kupfer(II)nitrattrihydratlösung und Kaliumiodat bzw. Natriumbromat, wurden die in Tabelle 3 definierten Proben hergestellt. Man erhielt klare, fast farblose Lösungen mit einem pH-Wert von 8,6. Die einzelnen Proben wurden bei 65°C gelagert und nach 5 Tagen das Aussehen bewertet. Die Ergebnisse sind in Tabelle 3 angegeben.

**Tabelle 3:**

| BIT [%] | MIT [%] | ITges. [%] | Cu²⁺ [ppm*] | KIO₃ [ppm] | Aussehen |
|---|---|---|---|---|---|
| 5 | 5 | 10 | 20 | 50 | Verfärbung, Bodensatz |
| 5 | 5 | 10 | - | 250 | Verfärbung, Bodensatz |
| 5 | 5 | 10 | 20 | 100 | klare Lösung |
| 5 | 5 | 10 | 20 | 250 | klare Lösung¹ |
| 5 | 5 | 10 | 20 | 500 | klare Lösung |
| | | | | | |

| BIT [%] | MIT [%] | ITges. [%] | Cu²⁺ [ppm*] | NaBrO₃ [ppm] | Aussehen |
|---|---|---|---|---|---|
| 5 | 5 | 10 | 20 | 50 | Verfärbung, Bodensatz |
| 5 | 5 | 10 | - | 500 | Verfärbung, Bodensatz |
| 5 | 5 | 10 | 20 | 100 | klare Lösung |
| 5 | 5 | 10 | 20 | 500 | klare Lösung |
| 5 | 5 | 10 | 20 | 1.000 | klare Lösung¹ |
| 5 | 5 | 10 | 20 | 2.000 | klare Lösung |

| | | | | | |
|---|---|---|---|---|---|
| *: bezogen auf den gesamten Gewichtsanteil der Isothiazolinone; ITges.: Isothiazolinongehalt [Gew.-%]; ¹: in geringem Maße weiße Ausfällungen | | | | | |

Wie man den in der Tabelle 3 dargestellten Ergebnissen entnehmen kann, lassen sich Cu²⁺-Ionen enthaltende Zusammensetzung mit Hilfe von 100 bis 500 ppm Kaliumiodat bzw. 100 bis 2.000 ppm Kaliumbromat stabilisieren.

### Beispiel 3: Einfluss der Ca²⁺-Ionen auf die Stabilität der Zusammensetzungen

Wie aus den Beispielen 1 und 2 hervorgeht, konnten in manchen mittels Cu²⁺-Ionen und Iodat bzw. Bromat stabilisierten Proben weiße Ausfällungen beobachtet werden. Ursache für das Auftreten dieser Ausfällungen ist, wie die nachfolgenden Versuche zeigen, die Gesamtkonzentration an Ca²⁺-Ionen in der jeweiligen Probe. Ca²⁺-Ionen können auf unterschiedlichem Wege in die Zusammensetzung gelangen, so kann produktionsbedingt in den in der Zusammensetzung enthaltenen Isothiazolinonen zumeist ein gewisser Anteil an Ca²⁺-Ionen enthalten sein, der sich dann in der Zusammensetzung wiederfinden lässt. Auch können das Lösungsmittel Wasser Ca²⁺-Ionen in die Zusammensetzung eingebracht werden, die zu dem Auftreten von Ausfällungen führen können.

Um zu untersuchen, in wieweit auch der Gehalt an Ca²⁺-Ionen Einfluss auf die Lagerstabilität der Zusammensetzungen hat, wurden die nachfolgenden Versuche durchgeführt.

Unter Verwendung von demineralisiertem Wasser, einer wässrigen Natriumhydroxyd-Lösung, handelsüblichem, feuchtem BIT bzw. mehrfach mit demineralisiertem Wasser gewaschenem BIT, einer wässrigen MIT Lösung (ACTICIDE M 25 S), einer Kupfer(II)nitrattrihydratlösung und Kaliumiodat wurden die in Tabelle 4 definierten Proben jeweils mit einem Gehalt an Kaliumiodat von 250 ppm hergestellt und die jeweiligen Ca²⁺-Gehalte bestimmt. Man erhielt klare, fast farblose Lösungen mit einem pH-Wert von 8,6. Die einzelnen Proben wurden bei 65°C gelagert und nach 5 Tagen das Aussehen bewertet. Die Ergebnisse sind in Tabelle 4 angegeben.

**Tabelle 4:**

| BIT [%] | MIT [%] | EDTA [ppm] | Cu²⁺ [ppm*] | Ca²⁺ [ppm] | Aussehen |
|---|---|---|---|---|---|
| 5 | 5 | - | 20 | 14 | klare Lösung¹ |
| 2,5 | 5 | - | 1 | 12 | klare Lösung¹ |
| 2,5 | 5 | 100 | 1 | 12 | klare Lösung |
| 5 | 5 | 50 | 20 | 12 | klare Lösung |
| 5 | 5 | 200 | 20 | 12 | klare Lösung |
| 5² | 5 | - | 20 | 2 | klare Lösung |
| 5² | 5 | - | 20 | 10 | klare Lösung |
| 2,5² | 5 | - | 1 | 4 | klare Lösung |

| | | | | | |
|---|---|---|---|---|---|
| *: bezogen auf den gesamten Gewichtsanteil der Isothiazolinone; ITges.: Isothiazolinongehalt [Gew.-%]; ¹: in geringem Maße weiße Ausfällungen; ²: mehrfach mit entionisiertem Wasser gewaschen | | | | | |

Wie man den in der Tabelle 4 dargestellten Ergebnissen entnehmen kann, hat auch die Gesamtkonzentration an Ca²⁺-Ionen Einfluss auf die Stabilität der jeweiligen Proben. Wie man sieht, kann die Stabilität entweder über die Zugabe eines Komplexbildners oder durch Verringerung des Gesamtgehalts an Ca²⁺-Ionen auf 10 Gew.-ppm oder weniger, noch weiter verbessert werden.

## Patentansprüche

1. Zusammensetzung, enthaltend:
(A) 2,5 bis 15 Gew.-% der Isothiazolinone 2-Methyl-2H-isothiazolin-3-on und 1,2-Benzisothiazolin-on und/oder dessen Natrium- und/oder Kalium-Salz,
(B) 0,5 bis 50 Gew.-ppm Kupfer(II)-Ionen, bezogen auf den Gewichtsanteil der Komponente (A),
(C) 100 bis 2.500 Gew.-ppm, bezogen auf die gesamte Zusammensetzung, wenigstens eines Oxidationsmittels, ausgewählt aus der Gruppe bestehend aus Natriumiodat, Kaliumiodat, Natriumbromat und Kaliumbromat oder Mischungen dieser und
(D) Wasser.

2. Zusammensetzung nach Anspruch 1, **dadurch gekennzeichnet, dass** die Zusammensetzung ferner:
(E) 0 bis 10 Gew.-ppm Ca²⁺-Ionen, bezogen auf die gesamte Zusammensetzung, enthält.

3. Zusammensetzung nach Anspruch 1, **dadurch gekennzeichnet, dass** die Zusammensetzung ferner:
(E) 10 bis 500 Gew.-ppm, wenigstens eines Komplexbildners, bezogen auf die gesamte Zusammensetzung, enthält

4. Zusammensetzung nach einem der Ansprüche 1 bis 3, **dadurch gekennzeichnet, dass** das Gewichtsverhältnis der Isothiazolinone 2-Methyl-2H-isothiazolin-3-on und 1,2-Benzisothiazolin-on im Bereich von 3:1 bis 1:3 liegt .

5. Zusammensetzung nach einem der Ansprüche 1 bis 4, **dadurch gekennzeichnet, dass** sie Zusammensetzung als Isothiazolinone nur 2-Methyl-2H-isothiazol-3-on und 1,2-Benzisothiazolin-3-on enthält.

6. Zusammensetzung nach einem der Ansprüche 1 bis 5, **dadurch gekennzeichnet, dass** diese einen Gewichtsanteil an organischen Lösungsmitteln von 0 bis 3 Gew.-% enthält.

7. Zusammensetzung nach einem der Ansprüche 1 bis 6, **dadurch gekennzeichnet, dass** diese einen Gewichtsanteil an NaCl im Bereich von 0 bis 2,8 Gew.-% enthält.

8. Zusammensetzung nach einem der Ansprüche 1 bis 7, **dadurch gekennzeichnet, dass** diese einen pH-Wert im Bereich von 8 bis 11 aufweist.

9. Zusammensetzung nach einem der Ansprüche 1 bis 8, **dadurch gekennzeichnet, dass** der Gehalt an Natriumiodat und/oder Kaliumiodat im Bereich von 100 bis 500 ppm liegt und der Gehalt an Natriumbromat und/oder Kaliumbromat im Bereich von 100 bis 2.000 ppm liegt.

10. Verwendung der Zusammensetzung nach einem der Ansprüche 1 bis 9 zum Schutz von technischen Materialien vor Befall durch und der nicht therapeutischen Bekämpfung von Mikroorganismen.

11. Verfahren zum Schutz von technischen Materialien vor Befall und/oder Zerstörung durch Mikroorganismen, **dadurch gekennzeichnet, dass** man eine Zusammensetzung nach einem der Ansprüche 1 bis 9 auf den Mikroorganismus oder dessen Lebensraum einwirken lässt.

## Claims

1. Composition containing:
(A) 2.5 to 15% of isothiazolinones 2-methyl-2H-isothiazolin-3-one and 1,2-benzisothiazolin-one by weight and/or their sodium and/or potassium salt,
(B) 0.5 to 50 ppm by weight of copper(II) ions, in relation to the proportion by weight of the component (A),
(C) 100 to 2,500 ppm by weight, in relation to the total composition, of at least one oxidizing agent selected from the group consisting of sodium iodate, potassium iodate, sodium bromate and potassium bromate or mixtures thereof, and
(D) water.

2. Composition according to claim 1, **characterized in that** the composition further contains:
(E) 0 to 10 ppm by weight Ca²⁺ ions, in relation to the total composition.

3. Composition according to claim 1, **characterized in that** the composition further contains:
(E) 10 to 500 ppm by weight of at least one complexing agent, in relation to the total composition

4. Composition according to any one of Claims 1 to 3, **characterized in that** the weight ratio of the isothiazolinones 2-methyl-2H-isothiazolin-3-one and 1,2-benzisothiazolin-one is between 3:1 and 1:3 .

5. Composition according to any one of Claims 1 to 4, **characterized in that** the composition contains only 2-methyl-2H-isothiazolin-3-one and 1,2-benzisothiazolin-one as isothiazolinones.

6. Composition according to one of claims 1 to 5, **characterized in that** it contains a weight fraction of organic solvents of 0 to 3% by weight.

7. Composition according to one of claims 1 to 6, **characterized in that** it contains a weight fraction of NaCl in the range of 0 to 2.8% by weight.

8. Composition according to one of claims 1 to 7, **characterized in that** it exhibits a pH value in the range of 8 to 11.

9. Composition according to one of claims 1 to 8, **characterized in that** the content of sodium iodate and/or potassium iodate is in the range of 100 to 500 ppm and the content of sodium bromate and/or potassium bromate is in the range of 100 to 2,000 ppm.

10. Use of the composition according to any one of claims 1 to 9 for the protection of industrial materials against attack by and non-therapeutic control of microorganisms.

11. Process for the protection of industrial materials against attack and/or destruction by microorganisms, **characterized in that** a composition according to one of claims 1 to 9 is allowed to act on the microorganism or its habitat.

## Revendications

1. Composition, contenant :
(A) 2,5 à 15 % en poids des isothiazolinones 2-méthyl-2H-isothiazolin-3-one et 1,2-benzisothiazolin-one et/ou de leur sel de sodium et/ou de potassium,
(B) 0,5 à 50 ppm en poids d'ions cuivre (II), par rapport à la proportion en poids du composant (A),
(C) 100 à 2 500 ppm en poids, par rapport à la composition totale, d'au moins un agent d'oxydation, choisi dans le groupe constitué par l'iodate de sodium, l'iodate de potassium, le bromate de sodium et le bromate de potassium et des mélanges de ceux-ci et
(D) de l'eau.

2. Composition selon la revendication 1, **caractérisée en ce que** la composition contient en outre :
(E) 0 à 10 ppm en poids d'ions Ca²⁺, par rapport à la composition totale.

3. Composition selon la revendication 1, **caractérisée en ce que** la composition contient en outre :
(E) 10 à 500 ppm en poids, d'au moins un agent de complexation, par rapport à la composition totale.

4. Composition selon l'une quelconque des revendications 1 à 3, **caractérisée en ce que** le rapport en poids des isothiazolinones 2-méthyl-2H-isothiazolin-3-one et 1,2-benzisothiazolin-one se situe dans la plage de 3 : 1 à 1 : 3.

5. Composition selon l'une quelconque des revendications 1 à 4, **caractérisée en ce que** la composition ne contient que de la 2-méthyl-2H-isothiazolin-3-one et de la 1,2-benzisothiazolin-3-one en tant qu'isothiazolinones.

6. Composition selon l'une quelconque des revendications 1 à 5, **caractérisée en ce que** celle-ci présente une proportion, en poids, de solvants organiques de 0 à 3 % en poids.

7. Composition selon l'une quelconque des revendications 1 à 6, **caractérisée en ce que** celle-ci contient une proportion, en poids, de NaCl dans la plage de 0 à 2,8 % en poids.

8. Composition selon l'une quelconque des revendications 1 à 7, **caractérisée en ce que** celle-ci présente une valeur de pH dans la plage de 8 à 11.

9. Composition selon l'une quelconque des revendications 1 à 8, **caractérisée en ce que** la teneur en iodate de sodium et/ou iodate de potassium se situe dans la plage de 100 à 500 ppm et la teneur en bromate de sodium et/ou bromate de potassium se situe dans la plage de 100 à 2 000 ppm.

10. Utilisation de la composition selon l'une quelconque des revendications 1 à 9 pour la protection de matériaux techniques contre l'infestation par des micro-organismes et pour la lutte non thérapeutique contre des micro-organismes.

11. Procédé pour la protection de matériaux techniques contre l'infestation et/ou la destruction par des micro-organismes, **caractérisé en ce qu'**on laisse agir une composition selon l'une quelconque des revendications 1 à 9 sur le micro-organisme ou sur son lieu de vie.
